# EUROPÄISCHE PATENTANMELDUNG

(11) **EP 3 284 947 A1**
(43) Veröffentlichungstag der Anmeldung: **21.02.2018**
(21) Anmeldenummer: 16184735.5
(22) Anmeldetag: 18.08.2016
(51) Int. Cl.: F03D 13/10

(54) **WINDENERGIEANLAGE UND VERFAHREN ZUR MONTAGE DER WINDENERGIEANLAGE**

(71) Anmelder: Skywind GmbH, 25813 Husum (DE)
(72) Erfinder: Richert, Frank, 25813 Husum (DE)
(74) Vertreter: Winter, Brandl, Fürniss, Hübner, Röss, Kaiser, Polte - Partnerschaft mbB

(57) **Zusammenfassung**

Die Erfindung betrifft ein Verfahren zur Montage einer an einem Turm (2) anbringbaren Windenergieanlage, wobei an der Turmspitze ein Maschinenhaus (1) anbringbar ist, und umfasst einen internen Kran (6) sowie eine an dem Maschinenhaus anbringbare Turbine (9), mit den Schritten: Bereitstellen von Teilschalen an einem Fußpunkt des Turms durch Anordnen der Teilschalen um den Fußpunkt (Schritt 1); Anheben der Teilschalen mittels des internen Krans und Befördern der Teilschalen zur Turmspitze zur Montage der Teilschalen an der Turmspitze (Schritt 2); Montage der Teilschalen zur Bildung des Maschinenhauses mit einer Öffnung in einem Dachbereich des Maschinenhauses zum Durchlassen des internen Krans (Schritt 3); Bereitstellen einer weiteren Kraneinrichtung und Anordnen derselben auf dem Dachbereich des Maschinenhauses mittels des internen Krans, wobei die weitere Kraneinrichtung zum Anheben der am Fußpunkt des Turms angeordneten Turbine ausgebildet ist (Schritt 4); Entfernen der weiteren Kraneinrichtung vom Maschinenhaus und Absenken derselben zum Fußpunkt nach der Montage der Turbine an dem Maschinenhaus (Schritt 5); und Einfahren des internen Krans in das Maschinenhaus und/oder den Turm und Verschließen der Öffnung (Schritt 6). Die Erfindung betrifft ferner eine Windenergieanlage.

## Beschreibung

Die vorliegende Erfindung betrifft eine Windenergieanlage mit einem Maschinenhaus, und insbesondere eine Windenergieanlage mit einem mehrteiligen Maschinenhaus, sowie ein Verfahren zur Montage der Windenergieanlage mit dem Maschinenhaus.

Es sind seit längerer Zeit Windenergieanlagen in verschiedener Ausführung und mit unterschiedlichen Konzepten bekannt. Bei den bekannten Windenergieanlagen ist im Allgemeinen ein Maschinenträger vorgesehen, der in einer Gondel am oberen Ende des Turms bzw. einer allgemeinen Tragstruktur angeordnet ist. Die Windenergieanlage umfasst neben der Gondel unter anderem eine Turbine mit einem Rotor und Rotorblättern, sowie einen Triebstrang mit einem Generator, einem Getriebe und einer Bremseinrichtung, die auf dem Maschinenträger gelagert und mit diesem mechanisch sicher verbunden sind. Die entsprechenden Teile der Windenergieanlage sind mit einer gemeinsamen Welle verbunden, die ebenfalls auf dem Maschinenträger mehrfach um ihre Rotordrehachse drehbar gelagert ist. Die weitere Lagerung der Gondel im oberen Bereich des Turms ermöglicht im Wesentlichen eine Drehung um die senkrechte Turmachse und somit eine Azimut-Verstellung. Der Rotor der Windenenergieanlage kann somit auch bei einer veränderlichen Windrichtung optimal ausgerichtet werden. Eine kontinuierliche Anpassung an die sich verändernde Windrichtung ist möglich.

Bei Windenergieanlagen, die eine bestimmte hohe Nennleistung überschreiten und somit beispielsweise mehr als 500 kW oder mehrere MW an Leistung aufweisen, ist der Rotor der Windenergieanlage aus der Windrichtung gesehen vor dem Turm der Windenergieanlage angeordnet. Er besteht vorzugsweise aus zwei oder drei an der Rotornabe angeordneten und verstellbaren Rotorblättern. Der Rotor dreht sich bei einer entsprechenden Windlast um eine im Wesentlichen horizontale Achse, die der vorstehend angegebenen Drehachse entspricht und wobei sich der Rotor in einer Ebene etwa ungefähr parallel zur Längsachse des Turms dreht und die Drehachse ungefähr senkrecht zur Längserstreckung des Turms verläuft.

Bei dem Aufbau oder der Montage der Windenergieanlagen in der vorstehend beschriebenen Anordnung wird nach dem Fertigstellen des Turms oder der Tragstruktur und der Einrichtungen zur Azimut-Verstellung die aus einer Vielzahl von Teilen bestehende Gondel zusammengesetzt. In der Gondel befindet sich der separate Maschinenträger und es ist die Gondel um diesen herum angeordnet. Die erforderlichen Einzelteile werden mittels eines externen Krans vom unteren Bereich der Windenergieanlage oder der Erdoberfläche angehoben und an die Spitze des Turms zur Montage gebracht. Nach der weitgehenden Fertigstellung der Gondel aus den mehreren Einzelteilen werden die weiteren Komponenten der Windenergieanlage in der vorstehend angegebenen Weise auf dem Maschinenträger angeordnet, wobei die einzelnen Komponenten ebenfalls in der entsprechenden Reihenfolge mittels des externen Krans angehoben und zur Gondel gebracht werden. Die jeweiligen Komponenten der Windenergieanlage sind zum Anheben mittels des externen Krans im unteren Bereich des Turms, beispielsweise auf der Erdoberfläche oder auf einer schwimmenden Plattform bei Offshore-Anlagen angeordnet. Die genannten Komponenten werden mittels des externen Krans einzeln angehoben und zur Turmspitze gebracht und in oder an der Gondel angeordnet und betriebsfähig zusammengesetzt. Danach kann die Gondel vervollständigt werden.

Da bei Windenergieanlagen einer höheren Leistung, beispielsweise im MW-Bereich, die Komponenten eine größere Masse aufweisen, insbesondere beispielsweise die Generatoren und Getriebeelemente, ist es erforderlich, dass ein externer Kran eine gewisse Größe aufweist und für eine Traglast von beispielsweise 50 bis 100 Tonnen Masse ausgelegt ist. Die Fahrzeuge eines derartigen externen Krans sind im allgemeinen sehr groß, so dass bei Windenergieanlagen an Land auf dem freien Feld oder in einem Waldgebiet nicht selten Wege und Zufahrtsstraßen hinsichtlich der Dimensionen und Belastbarkeit erheblich ausgebaut und verbreitert werden müssen, damit derartige Fahrzeuge zum Standort der Windenergieanlage gelangen können, sowohl bei dem ersten Aufbau der Windenergieanlage als auch bei nötigen Wartungsarbeiten und Reparaturen. Neben den hohen Kosten zur zeitweiligen Bereitstellung eines derartigen externen Krans kommen weitere Kosten für die entsprechende Aufbereitung der Zufahrtswege hinzu. Des Weiteren können immer strengere Umweltschutzauflagen derartigen Maßnahmen entgegenstehen.

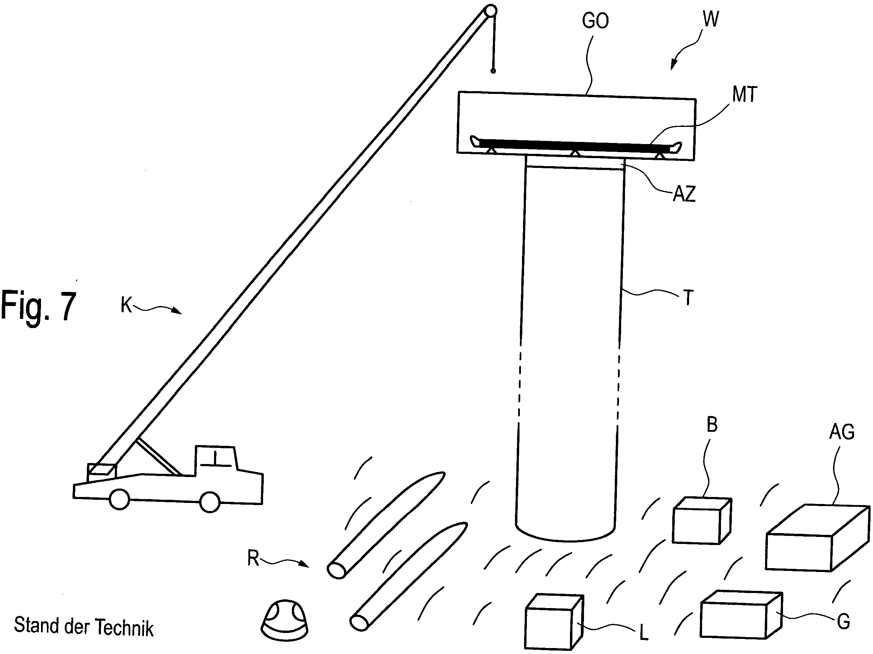

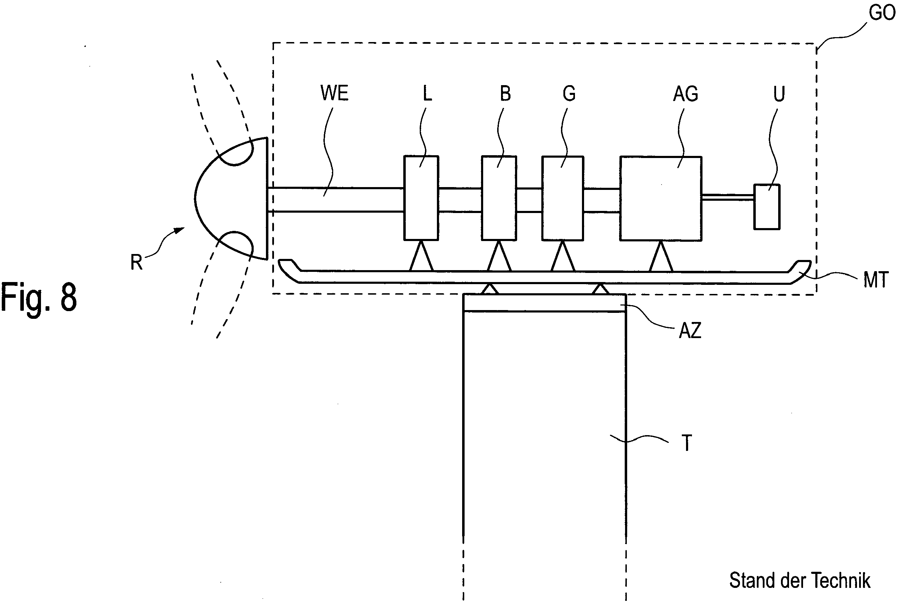

In diesem Zusammenhang zeigt Figur 7 in vereinfachter und schematischer Weise den konventionellen Aufbau einer Windenergieanlage W, wobei auf einem Turm T zumindest Teile der Gondel GO mittels des Krans K bereits montiert wurden. Am Fuß des Turms T sind weitere Teile oder Komponenten der Windenergieanlage angeordnet, wie die Rotoranlage R (zwei oder drei Rotorblätter und Nabe), eine Welle WE, ein Lager L, eine Bremse B, ein Getriebe G und ein Asynchrongenerator AG. Die entsprechenden Teile sind in der erforderlichen Reihenfolge in Figur 8 in schematischer Darstellung auf einem Maschinenträger MT angeordnet. Die Windenergieanlage W gemäß den Figuren A und B umfasst ferner eine Steuerelektronik bzw. einen Umrichter U. In Abhängigkeit von der jeweils erforderlichen mechanischen Verbindung der betreffenden Komponente mit dem Maschinenträger MT werden die Komponenten nacheinander mit Hilfe des externen Krans K angehoben und in der erforderlichen Reihenfolge auf dem Maschinenträger MT angeordnet. Die Windenergieanlage W umfasst ferner eine Azimut-Verstelleinrichtung AZ, mittels der der Maschinenträger MT in entsprechender Weise verdreht und einer sich ändernden Windrichtung nachgeführt werden kann.

In diesem Zusammenhang zeigt die Druckschrift WO 2009/056701 A2 eine Windenergieanlage mit zwei Rotorblättern, die mittels einer internen Kranfunktion teilweise demontiert werden kann. Hierbei wird der Rotor zusammen mit den Rotorblättern und Teilen der mechanischen Befestigung einer Gondel an der Turmspitze, an der die Windenergieanlage angeordnet ist, über im Turm geführt Seilzüge herabgelassen. Über weitere Seile kann die Gondel beim Herablassen oder Anheben in einer Position zwischen der Turmspitze und einem unteren Bereich des Turms hinsichtlich ihrer räumlichen Lage positioniert, geführt und gesichert werden. Die Gondel kann beabstandet vom Turm abgesenkt oder angehoben werden und wird im unteren Bereich des Turms entlang zweier Führungsseile vom Turm weggeführt, damit eine Berührung des Turms beispielsweise bei einer Windlast vermieden wird. Im unteren Bereich des Turms kann sodann die gesamte Einheit abgelegt werden, so dass eine Demontage oder Montage stattfinden kann oder Wartungsarbeiten oder Reparaturen durchgeführt werden können.

Die beiden Druckschriften US 2009 087311 A1 und US 4 311 434 A offenbaren Einrichtungen zum Anheben und Absenken einer Windenergieanlage, wobei mechanisch verfahrbare Einrichtungen in der Art eines Aufzugs am Turm der Windenergieanlagen angeordnet sind. Die Gondel der Windenergieanlage einschließlich der Rotorblätter kann vertikal entlang dem Turm bewegt werden, wobei verschiedene Positionen (Höhen) eingenommen werden können. Die jeweilige Gondel kann bis zur Turmspitze für einen Betrieb oder bis zum Erdboden zu Wartungsarbeiten oder Demontage verfahren werden.

Ferner offenbart die Druckschrift WO 2012/003985 A1 eine Windenergieanlage mit einer Kranfunktion, wobei die Turbine der Windenergieanlage durch Seilzüge entsprechend der Betriebsposition angehoben und bewegt werden kann. Beim Anheben der Turbine der Windenergieanlage in der Nähe der Gondel bzw. bei einem Absenken der Turbine aus der Betriebsposition greift ein spezielles Führungselement an der Turbine in einen zeitweiligen Drehpunkt an der Gondel ein, so dass ein gesteuertes Schwenken in die Gondel oder aus dieser heraus gewährleistet ist. Ausgehend von dieser Position kann die Turbine vollständig abgesenkt werden.

Schließlich offenbart die Druckschrift WO 2011/117005 A2 eine Nacelle für eine Windenergieanlage, wobei an eine zentrale Trageinrichtung (Haupteinheit) zum Tragen der wesentlichen Komponenten der Windenergieanlage, wie beispielsweise der Turbine, der Getriebeteile und des Generators, weitere Seitenteile angeordnet werden könne. Die Seitenteile, die mit einer internen Kranfunktion angehoben werden können, weisen keine eigene Tragefunktion auf und schließen die Haupteinheit an den Seiten ab.

Bei den bekannten Windenergieanlagen werden somit entweder die einzelnen Teile der Windenergieanlage gemäß der vorstehenden Beschreibung in Verbindung mit den Figuren 7 und 8 im oberen Bereich des Turms mittels eines externen Krans auf einem entsprechenden Träger angeordnet, oder es ist die Gondel mit einigen dieser Komponenten der Windenergieanlage über einen speziellen Mechanismus am Turm verfahrbar angeordnet, wobei dies jedoch spezielle mechanische Einrichtungen am Turm erfordert. Es kann in diesen Fällen ein üblicher Turm in Standardausführung nicht verwendet werden.

In den weiteren Fällen wird die Gondel oder Nacelle im Hinblick auf ihr Gehäuse oder wird die betreffende Gondel, wie es beispielsweise in Figur 7 schematisch dargestellt ist, aus einer Mehrzahl von Einzelteilen gebildet. Die Montage einer betreffenden Windenergieanlage oder die Maßnahmen im Falle von Wartungsarbeiten oder Reparaturen sind daher sehr aufwändig, insbesondere, wenn externe Kraneinrichtungen erforderlich sind, die sehr schwierig beigebracht werden müssen. In anderen Fällen sind aufwändige und hinsichtlich der Flexibilität sehr starre Einrichtungen erforderlich, die beispielsweise ein Absenken von Teilen der Gondel ermöglichen, dabei jedoch häufig ein weitgehendes Zerlegen der Gondel erfordern.

Der vorliegenden Erfindung liegt demgegenüber die Aufgabe zugrunde, eine Windenergieanlage der eingangs genannten Art und ein Verfahren zur Montage einer Windenergieanlage derart auszugestalten, dass auf einfache Weise ein erforderliches Maschinenhaus ausgestaltet und mit einer internen Kranfunktion montiert werden kann, wobei weitere Montage- oder Demontagemöglichkeiten gewährleistet sind.

Erfindungsgemäß wird diese Aufgabe hinsichtlich eines Verfahrens zur Montage einer Windenergieanlage sowie einer Windenergieanlage mit den in den Patentansprüchen angegebenen Merkmalen gelöst.

Die Erfindung betrifft zum Einen ein Verfahren zur Montage einer Windenergieanlage zur Umwandlung von Windenergie in elektrische Energie, wobei die Windenergieanlage an einem Turm anbringbar ist, an dessen Spitze ein Maschinenhaus anbringbar ist, sowie einen internen Kran an der Spitze des Turms aufweist, und wobei eine Turbine an dem Maschinenhaus anbringbar ist, mit den Schritten:
- Bereitstellen von Teilschalen an einem Fußpunkt des Turms durch Anordnen der Teilschalen um den Fußpunkt (Schritt 1),
- Anheben der Teilschalen nacheinander mittels des internen Krans und Befördern der Teilschalen nacheinander zur Turmspitze zur Montage der Teilschalen an der Turmspitze (Schritt 2),
- Montage der Teilschalen zur Bildung des Maschinenhauses der Windenergieanlage mit einer Öffnung in einem Dachbereich des Maschinenhauses zum Durchlassen des internen Krans (Schritt 3),
- Bereitstellen einer weiteren Kraneinrichtung und Anordnen derselben auf dem Dachbereich des Maschinenhauses mittels des internen Krans, wobei die weitere Kraneinrichtung zum Anheben der am Fußpunkt des Turms angeordneten Turbine ausgebildet ist (Schritt 4),
- Entfernen der weiteren Kraneinrichtung vom Maschinenhaus und Absenken der weiteren Kraneinrichtung zum Fußpunkt nach der Montage der Turbine an dem Maschinenhaus (Schritt 5), und
- Einfahren des internen Krans in das Maschinenhaus und/oder den Turm und Verschließen der Öffnung in dem Maschinenhaus (Schritt 6).

Die Erfindung betrifft zum Anderen eine Windenergieanlage zur Umwandlung von Windenergie in elektrische Energie, wobei die Windenergieanlage an einem Turm anbringbar ist, mit einem an der Spitze des Turms angeordneten Maschinenhaus, einer Turbine einschließlich eines Rotors, wobei die Turbine teilweise in das Maschinenhaus eingesetzt und an diesem befestigt ist, und einem internen Kran, wobei das Maschinenhaus eine erste Teilschale und eine zweite Teilschale aufweist, und das Maschinenhaus gebildet wird durch Zusammensetzen der beiden Teilschalen mittels des internen Krans und Befestigen der beiden Teilschalen miteinander, das Maschinenhaus an seinem Dachbereich eine Öffnung aufweist, und wobei der interne Kran in seinem betriebsbereiten Zustand durch die Öffnung aus dem Maschinenhaus herausragt, und der interne Kran in dem betriebsbereiten Zustand der Windenergieanlage in das Maschinenhaus und/oder den Turm zurückgezogen ist. Bezüglich des Maschinenhauses der Windenergieanlage ergibt sich erfindungsgemäß mit den Teilschalen (zumindest zwei Teilschalen) die Möglichkeit eines vereinfachten modulartigen Aufbaus. Während gemäß der Darstellung des Standes der Technik in Verbindung mit den Figuren 7 und 8 die Einzelteile in einem wiederum aus einer Mehrzahl von Einzelteilen gebildeten Maschinenhaus auf einem gemeinsamen Tragrahmen unter Zuhilfenahme einer externen Kraneinrichtung mit einer Vielzahl von Anhebevorgängen angeordnet werden, besteht erfindungsgemäß die Möglichkeit, auf einfache Weise das mittels der beiden Teilschalen zu einem großen Teil vorgefertigte oder vormontierte Maschinenhaus relativ rasch und auf einfache Weise im oberen Bereich des Turms bzw. an der Turmspitze anzuordnen und bereitzustellen. Mittels der internen Kranfunktion können die vorgefertigten Teilschalen, die am Fuß des Turms angeordnet sind bzw. bereit liegen, nacheinander angehoben und an der Turmspitze mit entsprechenden aufeinander abgestimmten Befestigungselementen befestigt werden. Es sind daher mit der erfindungsgemäßen Anordnung und in Verbindung mit dem erfindungsgemäßen Verfahren nur wenige Anhebevorgänge erforderlich.

Nachdem eine der Teilschalen auf der Turmspitze an ihrer Sollposition angeordnet ist, wird die weitere Teilschale angehoben und auf der Turmspitze positioniert, wobei beide Teilschalen einerseits miteinander sicher befestigt und andererseits an Turmspitze befestigt werden. Somit wird auf einfache Weise und hinsichtlich der erforderlichen Maßnahmen relativ rasch das Maschinenhaus der Windenergieanlage montiert und bereitgestellt. Das auf diese Weise gebildete Maschinenhaus ist nach der Montage selbsttragend und nach der Herstellung interner Anschlüsse und Verbindungen fertiggestellt. Das erfindungsgemäße selbsttragende Maschinenhaus dient als ein wichtiges Element der Windenergieanlage zur Aufnahme der Turbine bzw. des vormontierten Turbinensatzes der Windenergieanlage. Somit dient das derart gebildete selbsttragende Maschinenhaus als eine zentrale Tragstruktur oder Turbinenträger der Windenergieanlage, die weiterer Tragelemente nicht bedarf.

Das Anheben der jeweiligen Komponenten des Maschinenhauses der Windenergieanlage erfolgt mittels des internen Krans (mittels der internen Kraneinrichtung), so dass eine externe selbstfahrende Kraneinrichtung nicht erforderlich ist. Der interne Kran bzw. die interne Kraneinrichtung kann auch zum Aufbau des Turms verwendet werden, wobei der interne Kran im Inneren des Turms angeordnet ist, so dass in autarker Weise eine Windenergieanlage aufgebaut und bei Bedarf ganz oder teilweise wieder abgebaut werden kann, ohne dass externe Einrichtungen erforderlich sind.

Mittels des internen Krans wird eine weitere Kraneinrichtung an dem Maschinenhaus bzw. an oder auf dessen Dachbereich angeordnet. Die in Teilen am Fußpunkt des Turms bereitgestellte weitere Kraneinrichtung wird mittels des internen Krans angehoben und an der vorbestimmten Stelle am oder auf dem Dachbereich angeordnet und am Maschinenhaus befestigt. Die weitere Kraneinrichtung ist zum Anheben der Turbine und zum Einsetzen derselben in das Maschinenhaus vorgesehen bzw. ausgelegt. Ist die Turbine der Windenergieanlage vollständig montiert oder am Maschinenhaus befestigt, dann wird die weitere Kraneinrichtung wieder vom Maschinenhaus demontiert und mittels des internen Krans zum Fußpunkt des Turms abgesenkt. Die weitere Kraneinrichtung ist somit nur zeitweilig am Maschinenhaus angeordnet.

Das Maschinenhaus gemäß der vorliegenden Erfindung kann bei der Anwendung an einer Windenergieanlage sowohl die Montagekosten als auch die Montagezeit erheblich vermindern. Die Teilschalen des Maschinenhauses können zum großen Teil und ungeachtet ihres Aufbaus vor dem Anheben zur Turmspitze vormontiert und vorbereitet werden. Es können die Teilschalen des Maschinenhauses mit weiteren Komponenten ausgestattet bzw. vormontiert werden. Es kann die Vormontage eine nebengeordnete Infrastruktur der Windenergieanlage wie Hilfsbetriebe und Sensorik betreffen. Angehoben und zur Turmspitze gebracht werden somit lediglich die Teilschalen in der nahezu fertigen (vormontierten bzw. bestückten) Form, wobei lediglich die Montagearbeiten, und insbesondere die Befestigungsarbeiten der beiden Teilschalen miteinander und der beiden Teilschalen an der Turmspitze erforderlich sind.

Die mittels des internen Krans bereitgestellte interne Kranfunktion dient ebenfalls zum Vorbereiten des Anhebens und Montierens der Turbine in Verbindung mit der weiteren Kranfunktion, wobei nach Abschluss dieser Montagearbeiten und dem Übergang der Windenergieanlage in den gewünschten betriebsfähigen Zustand (das Maschinenhaus und die Turbine sind montiert und die weitere Kraneinrichtung ist demontiert) der interne Kran abgesenkt bzw. in das Maschinenhaus eingefahren wird. Die Öffnung im oberen Bereich des Maschinenhauses, durch die der interne Kran nach oben über das Maschinenhaus zur Bereitstellung der internen Kranfunktion hinausragt, wird nach dem Einfahren und Absenken des internen Krans dicht verschlossen. Für den Betrieb der Windenergieanlage wird damit auch die grundsätzlich bereits vorhandene Stabilität des im Wesentlichen aus den beiden Teilschalen bestehenden und selbsttragenden Maschinenhauses mit dem Ansetzen der Turbine weiter vergrößert.

Mit der auf dem Turm angeordneten Windenergieanlage, die das erfindungsgemäße aus den Teilschalen gebildete Maschinenhaus aufweist sowie dem erfindungsgemäßen Verfahren zur Montage der Windenergieanlage mit dem Maschinenhaus können die Entstehungskosten für eine Windenergieanlage deutlich vermindert werden, und es können des Weiteren Abhängigkeiten in Bezug auf eine aufwändige externe Kraneinrichtung, die geeignet ist, die Teile des Maschinenhauses und die Turbine zur Turmspitze anzuheben und zu positionieren, vermindert werden. Eine externe Kranfunktion zur Montage dieser Komponenten der Windenergieanlage ist somit nicht erforderlich. Vielmehr wird mittels der internen Kranfunktion bzw. des internen Krans das Maschinenhaus auf der Basis der Teilschalen montiert, und es wird danach in einer in dem Maschinenhaus gebildete offene Seite die Turbine in Verbindung mit der weiteren (temporären) Kraneinrichtung eingesetzt. Mit einem geringen Aufwand kann somit die Windenergieanlage sowie der zum Tragen der Windenergieanlage erforderliche Turm rasch und einfach, d. h. in völlig autarker Weise aufgebaut und in den betriebsbereiten Zustand gebracht werden.

Weitere Ausgestaltungen der vorliegenden Erfindung in Bezug auf die Windenergieanlage und das Verfahren zur Montage der Windenergieanlage sind in den abhängigen Patentansprüchen angegeben.

Bei dem Verfahren zur Montage einer Windenergieanlage kann der Schritt des Bereitstellens der Teilschalen zur Bildung des Maschinenhauses die Vormontage einer nebengeordneten Infrastruktur vor dem Anheben der Teilschalen und Befestigen der Teilschalen an der Turmspitze umfassen.

Es kann bei dem Verfahren die Vormontage der nebengeordneten Infrastruktur die Montage von beispielsweise Hilfsbetrieben, Steuerungseinrichtungen, Sensoreinrichtungen und Gehäuseteilen derselben in den Teilschalen während der Anordnung der Teilschalen am Fußpunkt des Turms umfassen.

Der Schritt des Befestigens der beiden Teilschalen an der Turmspitze kann bei dem Verfahren die drehbare Befestigung der beiden Teilschalen an einer Azimut-Verstelleinrichtung oberhalb eines obersten Turmsegments umfassen.

Es können die Teilschalen an einer jeweiligen zur Befestigung am Turm abgewandten Seite eine Turbinenöffnung und einen Befestigungsbereich aufweisen, und es kann der Schritt des Befestigens der Turbine den Schritt des Schwenkens der Turbine in die Turbinenöffnung des Maschinenhauses sowie die Befestigung der Turbine an dem Befestigungsbereich des Maschinenhauses umfassen.

Das Montieren der Turbine an dem Maschinenhaus kann das Anheben der Turbine und Schwenken derselben mittels der weiteren Kraneinrichtung zum Anbringen der Turbine an dem Maschinenhaus umfassen.

Bei der Windenergieanlage können die Teilschalen jeweils in ihrer oberen Oberfläche eine Teilöffnung aufweisen, und es kann mittels der Teilöffnungen die Durchgangsöffnung nach dem Zusammensetzten der Teilschalen im Dachbereich des Maschinenhauses gebildet werden.

Es können bei der Windenergieanlage die Teilschalen zur Bildung des Maschinenhauses an ihrer dem Turm abgewandten Stirnseite jeweils eine Turbinenöffnung aufweisen zum Ansetzen der Turbine an das Maschinenhaus, und es kann ringförmig um die Turbinenöffnung ein Befestigungsbereich und an der Turbine ein Turbinenbefestigungsbereich an einer dem Maschinenhaus zugewandten Seite ausgebildet sein, der an den Befestigungsbereich des Maschinenhauses angepasst und der bei der Montage der Turbine am Maschinenhaus mit dem Befestigungsbereich verbindbar ist.

Die Windenergieanlage kann eine weitere Kraneinrichtung aufweisen zum Anheben der Turbine zur Montage am Maschinenhaus, und die weitere Kraneinrichtung kann mittels des internen Krans zeitweilig und abnehmbar im Dachbereich des Maschinenhauses angeordnet sein.

Die vorliegende Erfindung wird nachstehend anhand von Ausführungsbeispielen unter Bezugnahme auf die Zeichnung näher beschrieben. Es zeigen:
Figur 1 eine vereinfachte und schematische Darstellung des Turms zum Tragen der Windenergieanlage mit den vorbereiteten Teilschalen des Maschinenhauses,
Figur 2 in vereinfachter schematischer Darstellung den Turm zum Tragen der Windenergieanlage mit einer montierten Teilschale und der weiteren zu montierenden Teilschale,
Figur 3 eine vereinfachte perspektivische Darstellung des Maschinenhauses einschließlich des internen Krans zur Montage einer weiteren Kraneinrichtung auf oder an dem Maschinenhaus der Windenergieanlage,
Figur 4 eine schematische Darstellung des Anhebens einer Turbine in Richtung des Maschinenhauses mittels der weiteren Kraneinrichtung,
Figur 5 eine vereinfachte schematische Darstellung des Schwenkens der Turbine nach einem vorläufigen Ansetzen der Turbine an das Maschinenhaus mittels der weiteren Kraneinrichtung vor dem vollständigen Ansetzen der Turbine an das Maschinenhaus,
Figur 6 in vereinfachter perspektivischer Darstellung das Maschinenhaus sowie die daran vollständig angesetzte Turbine der Windenergieanlage,
Figur 7 eine schematische Darstellung der Montage einer Windenergieanlage aus mehreren Komponenten gemäß dem Stand der Technik, und
Figur 8 eine schematische Darstellung des inneren Bereichs der Gondel einer bekannten Ausführung einer Windenergieanlage mit den auf einem Hauptrahmen angeordneten Komponenten der Windenergieanlage.

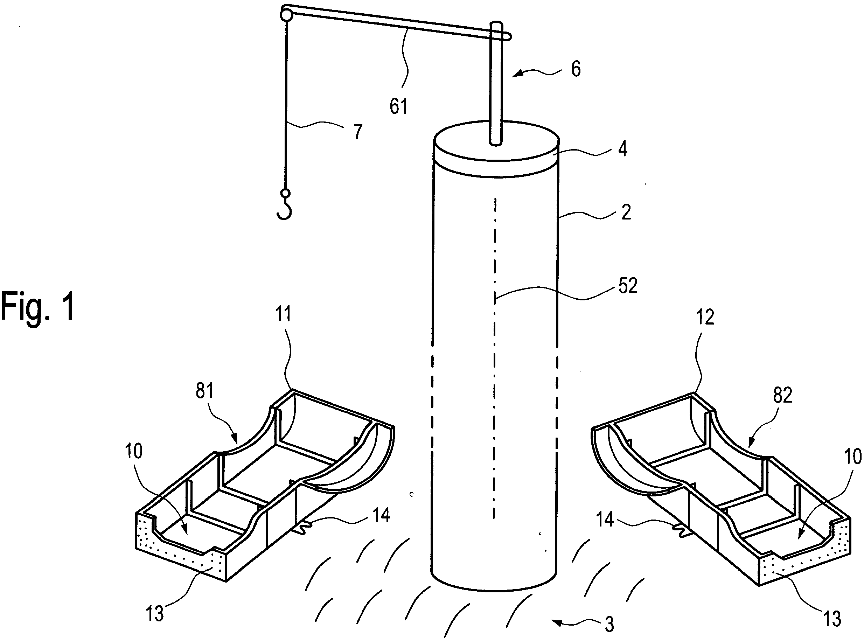

Nachstehend wird der grundsätzliche Aufbau der Windenergieanlage sowie die Erfindungsgemäße Vorgehensweise bei der Montage oder dem Aufbau der Windenergieanlage in Verbindung mit den Figuren 1 bis 6 veranschaulicht.

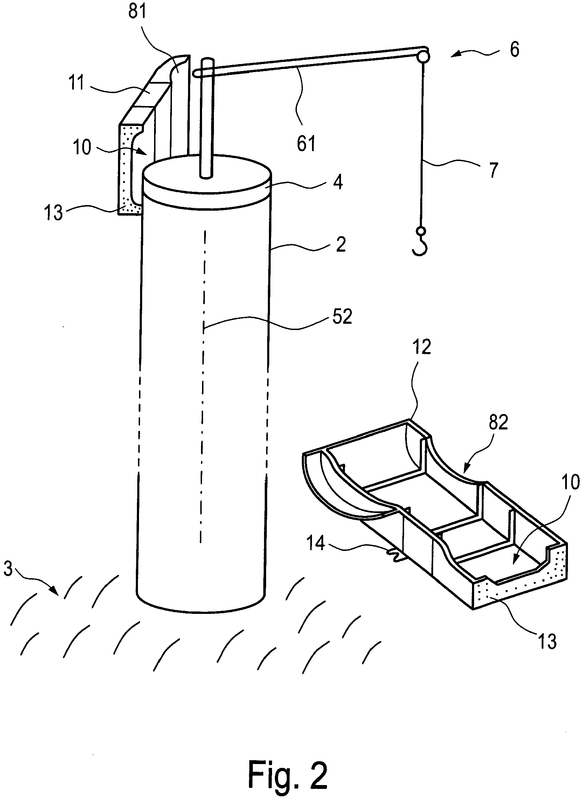

Die Figuren 1 und 2 zeigen in vereinfachter und schematischer Weise die Komponenten und das Zusammensetzen eines Maschinenhauses 1 der Windenergieanlage W.

Die Windenergieanlage W ist gemäß den Figuren 1 und 2 grundsätzlich mit einer Trägereinrichtung oder Tragstruktur verbindbar, die nachstehend vereinfacht als Turm 2 bezeichnet wird. Der Turm 2 zum Tragen der Windenergieanlage W ist zur Vereinfachung der Darstellung auf der Erdoberfläche bzw. dem Erdboden 3 angeordnet. Der Begriff des Erdbodens betrifft den Erdboden 3 am Fuß des Turms 2, an dessen oberen Ende (Turmspitze) die Windenergieanlage W angebracht ist, falls diese auf dem Land angeordnet ist, oder auch eine dort angeordnete Montageplattform in einer anderen Höhe im unteren Bereich des Turms 2. Nachstehend wird hierauf auch als Fußpunkt des Turms 2 Bezug genommen.

Die Anordnung der Windenergieanlage W ist nicht auf die Erdoberfläche oder den Erdboden 3 beschränkt, vielmehr kann die Windenergieanlage auch als eine sogenannte Offshore-Windenergieanlage ausgebildet sein, bei der die Windenergieanlage W bzw. der Turm 2 auf einer Plattform im Meer oder auf dem Meeresboden angeordnet ist. Bei Offshore-Anlagen in der Nähe einer Küste ist im allgemeinen der Turm 2 auf dem Meeresboden angeordnet, und es ist daher der Begriff des Bodens im Sinne einer schwimmenden Plattform zu interpretieren, die sich (ständig oder zumindest zeitweise) am Fuß des Turms 2 befindet. Die vorliegende Erfindung ist bei Windenergieanlagen W ungeachtet ihrer Anordnung an Land oder auf dem Meeresboden (Offshore-Anlage) anwendbar und nicht auf eine dieser Möglichkeiten beschränkt. Die erfindungsgemäße Windenergieanlage kann auch ohne Einschränkung der Funktion und mit den dargestellten Vorteilen auf einer schwimmenden Plattform angeordnet werden.

Nachstehend werden die Windenergieanlage W und die erfindungsgemäßen Maßnahmen zur Vereinfachung und nicht einschränkend am Beispiel der Anordnung auf dem Erdboden 3 gemäß den Figuren 1 und 2 veranschaulicht.

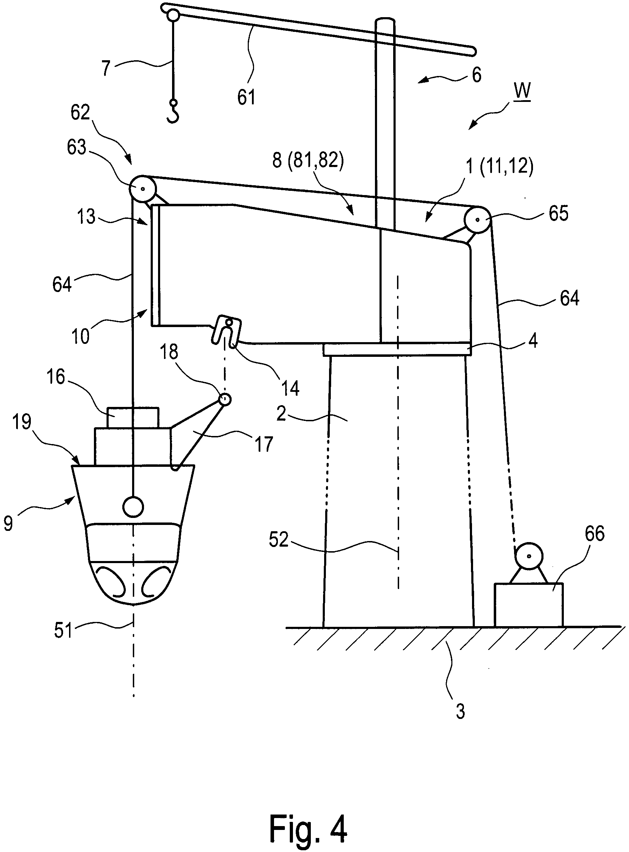

An dem vorzugsweise aus einer Vielzahl von Segmenten bestehenden Turm 2 ist ferner eine Verstelleinrichtung 4 schematisch angedeutet, die zur Verstellung der Drehposition bzw. Raumlage einer nachstehend noch beschriebenen Drehachse 51 des Rotors der Windenergieanlage W (Figur 4) im Wesentlichen relativ zu einer Erstreckungsachse 52 des Turms 2 dient. Die Verstelleinrichtung 4 umfasst entsprechende Antriebseinrichtungen und Lagereinrichtungen, die zur Vereinfachung der Darstellung nicht gezeigt sind, womit das Maschinehaus 1 der Windenergieanlage W zusammen mit dem Rotor verstellt bzw. um eine Erstreckungsachse 52 (Hochachse) des Turms 2 gedreht werden kann, so dass die Windenergieanlage W einer sich ändernden Windrichtung nachgeführt werden kann. Im Einzelnen ist die Verstelleinrichtung 4 oberhalb eines obersten Turmsegments und somit an der Turmspitze angeordnet.

Gemäß Figur 1 sind auf ungefähr der Höhe des Erdbodens 3 und vorzugsweise auf einem (nicht gezeigten) Trägergestell mit geringer Höhe eine erste Teilschale 11 und eine zweite Teilschale 12 des Maschinenhauses 1 angeordnet bzw. bereitgestellt. Die erste Teilschale 11 und die zweite Teilschale 12 bilden in zusammengesetztem Zustand im Wesentlichen das Maschinenhaus 1 der Windenergieanlage W, wobei das Maschinenhaus 1 dazu ausgebildet ist, weitere nachstehend noch beschriebene Komponenten der Windenergieanlage W aufzunehmen und zu beherbergen.

Die Windenergieanlage W umfasst ferner eine interne Kraneinrichtung bzw. einen internen Kran 6. Der interne Kran 6 ist in den Figuren 1 und 2 im oberen Bereich des Turms 2, d. h. an der Turmspitze und oberhalb eines obersten Turmsegments bzw. oberhalb der Verstelleinrichtung 4 angeordnet und ausgebildet zum Anheben von Gegenständen, die im unteren Bereich des Turms 2 und beispielsweise auf dem Erdboden 3 angeordnet sind. Diese Gegenstände sind beispielsweise Komponenten der Windenergieanlage W, und gemäß der Darstellung in den Figuren 1 und 2 beispielhaft die erste und zweite Teilschale 11 und 12 des Maschinenhauses 1.

Des Weiteren ist der interne Kran 6 vorgesehen und ausgelegt zum Aufbauen des aus einer Vielzahl von Segmenten bestehenden Turms 2. Der interne Kran 6 ist in der Lage, die einzelnen Segmente zur Montage an der jeweiligen Turmspitze anzuheben, wobei der interne Kran 6 mit der wachsenden Höhe des Turms 2 ebenfalls im Turm 2 angehoben und neu positioniert wird.

Die interne Kraneinrichtung bzw. der interne Kran 6 ist somit im oberen Bereich des Turms 2 angeordnet und überragt die Oberseite des Turms 2 (ragt beispielsweise über die Verstelleinrichtung 4 hinaus) und umfasst einen Ausleger 61 mit einem Seil 7, mittels dessen am Fuß des Turms 2 (Fußpunkt), beispielsweise auf dem Erdboden 3 angeordnete Gegenstände angehoben und zur Turmspitze gebracht werden können. Ebenso ist der interne Kran 6 ausgebildet, Gegenstände im Bereich der Turmspitze mittels der internen Kranfunktion anzuheben und mit einer entsprechenden Absenkbewegung entlang dem Turm bis zum Erdboden 3 oder auf eine andere Höhe niedriger als die Turmspitze gesteuert abzusenken. In Abhängigkeit von der Art der anzuhebenden oder abzusenkenden Gegenstände oder Komponenten (Form und Abmessungen) der Windenergieanlage W ragt der Ausleger des internen Krans 6 in entsprechender Weise und ausreichend weit über den Turm 2 hinsichtlich dessen Höhe und Umfang hinaus. Der interne Kran 6 ist um seine Hochachse (parallel zur Erstreckungsachse 52 des Turms 2; siehe Figuren 1 und 2) drehbar angeordnet, wobei auch der Ausleger 61 verstellbar ist.

Bei der Darstellung in den Figuren 1 und 2 sind die beispielhaft anzuhebenden Komponenten der Windenergieanlage W die erste und zweite Teilschale 11 und 12 des Maschinenhauses 1. Beide Teilschalen 11 und 12 sind in vormontierter Weise auf dem Erdboden 3 am Fuß des Turms 2 angeordnet bzw. bereitgestellt.

Gemäß den Figuren 1 und 2 sind die beiden Teilschalen 11 und 12 des Maschinenhauses 1 zur Turmspitze zu bringen und dort einerseits mit dem Turm 2 zu verbinden und andererseits miteinander fest und sicher zu verbinden. Ohne Festlegung der Reihenfolge wird gemäß der Darstellung in den Figuren 1 und 2 die erste Teilschale 11 mittels des internen Krans 6 angehoben und im oberen Bereich des Turms bzw. an der Turmspitze und im vorliegenden Fall oberhalb und an der Verstelleinrichtung 4 montiert. Figur 2 zeigt die Situation der montierten oder befestigten ersten Teilschale 11 am Turm 2.

Nachfolgend wird die zweite Teilschale 12 mittels des internen Krans 6 angehoben und zur Turmspitze befördert und dort befestigt. Die Befestigung der ersten und zweiten Teilschale 11 und 12 erfolgt in der Weise, dass einerseits die Teilschalen 11 und 12 miteinander verbunden werden, so dass das Maschinenhaus 1 gebildet wird, und andererseits die beiden Teilschalen 11 und 12 mit der Verstelleinrichtung 4 und damit auch mit dem Turm 2 verbunden sind, so dass eine stabile Befestigung am Turm 2 hergestellt wird und zusätzlich gewährleitstet ist, dass das Maschinenhaus 1 mittels der Verstelleinrichtung 4 zur Verstellung des Azimut-Winkels um die Erstreckungsachse 52 in der Erstreckungsrichtung des Turms 2 drehbar ist.

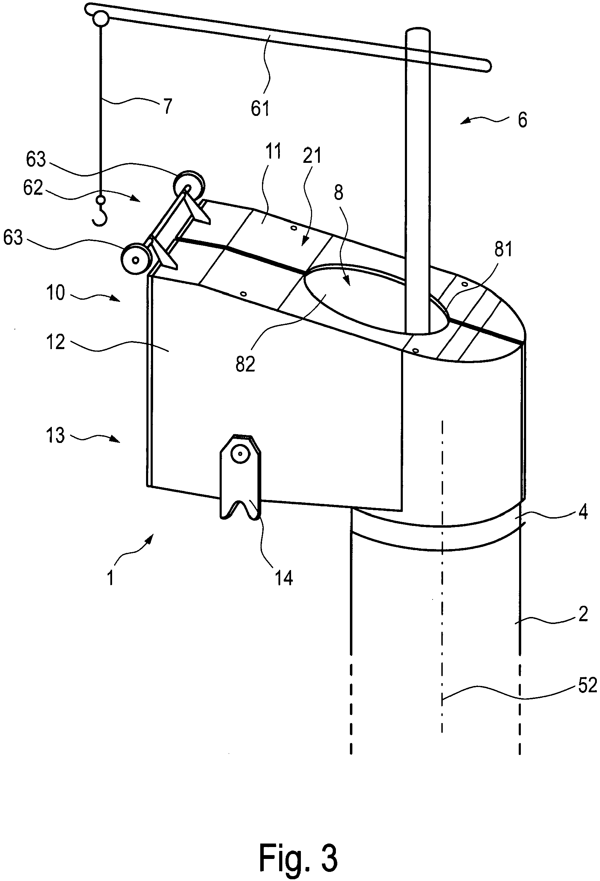

In diesem Zusammenhang zeigt Figur 3 das zusammengesetzte Maschinenhaus 1 bestehend aus im Wesentlichen den beiden Teilschalen 11 und 12 als die Hauptkomponenten des Maschinenhauses 1, das somit als selbsttragendes Gehäuse ausgebildet ist. Die beiden Teilschalen 11 und 12 können bei der Anordnung auf dem Erdboden 3 (Fußpunkt des Turms 2) oder einer entsprechenden Höhe am unteren Ende des Turms 2 vormontiert werden, wobei weitere kleinere Komponenten in den jeweiligen Teilschalen 11 oder 12 angeordnet werden können. Die kleineren Komponenten sind Teile der nebengeordneten Infrastruktur der Windenergieanlage W. Es sind somit im Wesentlichen nur zwei Hauptkomponenten in Form der ersten und zweiten Teilschale 11 und 12 zum Bilden des Maschinenhauses 1 durch den internen Kran 6 anzuheben und an der Turmspitze oberhalb der Verstelleinrichtung 4 zu montieren. Der Begriff der Vormontage betrifft somit einerseits das Zusammensetzen der einzelnen Teilschalen 11 und 12 selbst zur Bildung der selbsttragenden Konstruktion, sowie andererseits die Bestückung der Teilschalen 11 und 12 mit der nebengeordneten Infrastruktur.

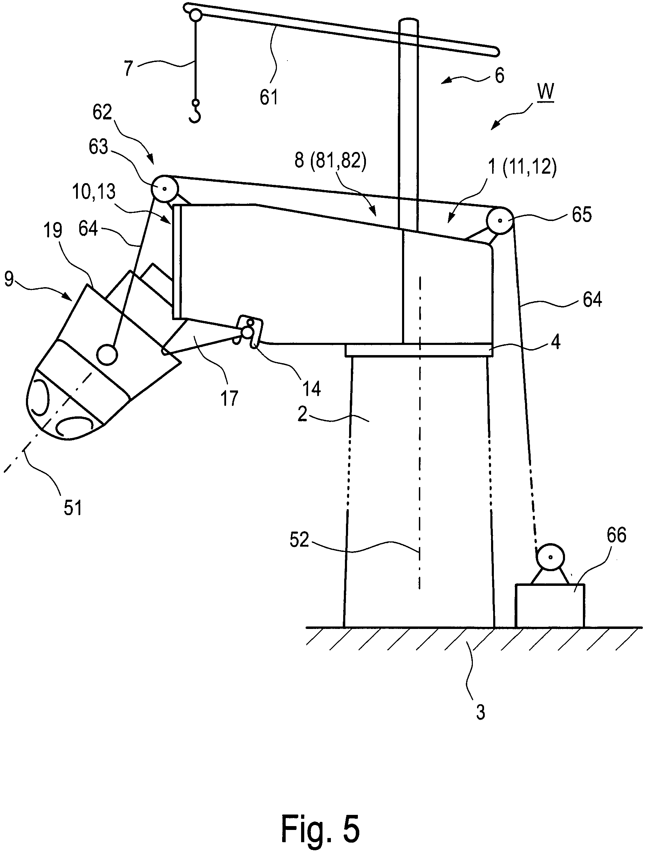

Nach dem Ende der Montage der beiden Teilschalen 11 und 12 zur Bildung des Maschinenhauses 1 in der in Figur 3 gezeigten Anordnung ragt der interne Kran 6 durch eine Öffnung 8 in einer oberen Oberfläche bzw. einem Dachbereich 21 des Maschinenhauses 1 darüber hinaus. Die interne Kranfunktion ist somit auch bei einem montierten Maschinenhaus 1 in vollem Umfang verfügbar und es können auch bei dem montierten Maschinenhaus 1 weitere spezielle Komponenten der Windenergieanlage W angehoben und am Maschinenhaus 1 angeordnet bzw. montiert werden. Dies betrifft eine nachstehend in Verbindung mit den Figuren 4 und 5 noch beschriebene weitere Kraneinrichtung 62, die bereits in Figur 3 teilweise und vereinfacht angedeutet ist.

Zur Vereinfachung der Darstellung sind gemäß den Figuren 1 und 2 in den jeweiligen Teilschalen 11 und 12 des Maschinenhauses 1 die vormontierbaren Komponenten (nebengeordnete Infrastruktur) nicht dargestellt. Die jeweiligen kleineren vormontierbaren Komponenten sind derart ausgebildet und angeordnet, dass im Inneren des Maschinenhauses 1 ein entsprechender Raum vorliegt bzw. verbleibt, beispielsweise für die nachstehend noch beschriebene Turbine 9 der Windenergieanlage W, die nach ihrer Montage teilweise in das Maschinenhaus 1 hineinragen kann.

Die Öffnung 8 als Durchgangsöffnung für den internen Kran 6 einschließlich seines Auslegers 61 und des Kranseils 7 wird durch zwei entsprechende Ausnehmungen in den beiden Teilschalen 11 und 12 gebildet.

Die erste Teilschale 11 umfasst gemäß Figur 1 die erste Teilöffnung 81, und die zweite Teilschale 12 weist die zweite Teilöffnung 82 auf. Nach der Montage der beiden Teilschalen 11 und 12 zur Bildung des Maschinenhauses 1 wird die Öffnung 8 im Dachbereich 21 gebildet, durch die sich der interne Kran 6 erstreckt und wobei der interne Kran 6 hinsichtlich seiner Bewegungen und speziell seiner Drehbarkeit um seine Hochachse nicht beschränkt ist. Der interne Kran 6 kann durch die Öffnung 8 in das Innere des Maschinenhauses 1 oder teilweise auch in das Innere des Turms 2 gebracht werden, wenn er nicht mehr benötigt wird. In der in der Figur 3 gezeigten Darstellung der Anordnung des internen Krans 6 ragt dieser nach der Fertigstellung des Maschinenhauses 1 aus im Wesentlichen der ersten Teilschale 11 und der zweiten Teilschale 12 weiter durch die Öffnung 8 über das Maschinenhaus 1 hinaus und ist bereit zum Anheben der weiteren Kraneinrichtung 62 der Windenergieanlage W, wobei dies nachstehend noch beschrieben ist.

Die in den Figuren 1 und 2 gezeigten Teilschalen 11 und 12 der Windenergieanlage W weisen an ihrem vorderen Bereich in der zu dem Turm 2 abgewandten Seite (Stirnseite) eine Turbinenöffnung 10 auf, in die nach der vollständigen Montage der ersten und zweiten Teilschale 11 und 12 die Turbine 9 eingesetzt werden kann. Jede der Teilschalen 11 und 12 umfasst somit einen Teil der Turbinenöffnung 10. Um die Turbinenöffnung 10 liegt stirnseitig ein Befestigungsbereich 13, der an den betreffenden Enden der jeweiligen ersten und zweiten Teilschale 11 und 12 an der zu dem Turm 2 abgewandten Seite angeordnet ist und an dem nach dem späteren Ansetzen der Turbine 9 diese an dem Maschinenhaus 1 sicher befestigt wird. Eine entsprechende Anzahl und Anordnung von Verbindungselementen wie Schrauben, Bolzen oder Klauen ist an dem Befestigungsbereich 13 und in analoger Anordnung an einem entsprechenden Turbinenbefestigungsbereich 19 an der Turbine 9 vorgesehen. Mit dem Zusammensetzen des Maschinenhauses 1 aus den Teilschalen 11 und 12 ergibt sich insgesamt ein ungefähr ringförmiger Befestigungsbereich 13 um die Turbinenöffnung 10 des selbsttragenden Maschinenhauses 1, wobei der gesamte Befestigungsbereich 13 eine im Wesentlichen senkrechte Schnittstelle zur Turbine 9 bildet (in einer Ebene senkrecht zur Rotordrehachse 51 und etwa parallel zur Erstreckungsachse 52 des Turms 2).

Eine des Weiteren in den Figuren 1 bis 3 gezeigte Klaue 14 dient zum erleichterten Einsetzen und speziell zum Schwenken der Turbine 9 beim Einsetzen in bzw. Anbringen an das Maschinenhaus 1 mit präziser Positionierung, wobei Einzelheiten hierzu nachstehend in Verbindung mit den Figuren 4 bis 6 beschrieben werden.

Die in Figur 3 gezeigte Anordnung des Maschinenhauses 1 der Windenergieanlage W im oberen Bereich des Turms 2 bzw. an der Turmspitze stellt somit eine lasttragende bzw. selbsttragende Hülle für die Turbine 9 sowie weitere Komponenten der Windenergieanlage W dar und ist beispielsweise als eine Schweißkonstruktion, eine Fachwerkkonstruktion oder eine Gusskonstruktion ausgebildet. Das Maschinenhaus 1 kann somit auch als ein Turbinenträger dienen und bezeichnet werden. Im Wesentlichen besteht das Maschinenhaus 1 aus den beiden getrennt montierbaren Teilschalen 11 und 12, wobei das damit gebildete Maschinenhaus 1 mit einer Seite an dem Turm 2 befestigt ist und an der von dem Turm abgewandten Seite die Turbinenöffnung 10 aufweist, um die der jeweilige Befestigungsbereich 13 zum Befestigen der Turbine 9 ausgebildet ist.

Die Teilschalen 11 und 12 sind auf dem Erdboden 3 (bzw. am Fußpunkt des Turms 2) oder unter gleichartigen Bedingungen getrennt herzustellen und können auf einfache Weise mit den für den späteren Betrieb erforderlichen kleineren Komponenten in Form der nebengeordneten Infrastruktur bestückt bzw. vormontiert werden. Durch die jeweils vorgesehene erste und zweite Teilschale 11 oder 12 ist der Einbau weiterer Komponenten (z. B. die nebengeordnete Infrastruktur) bzw. deren Bestückung von der offenen Seite ohne Beeinträchtigungen möglich.

Die beiden Teilschalen 11 und 12 werden mittels des internen Krans 6 nacheinander angehoben und an der Turmspitze sowie miteinander befestigt. In dem jeweils oberen Bereich oder Dachbereich 21 der ersten und zweiten Teilschale 11 und 12 sind jeweilige erste und zweite Teilöffnungen 81 und 82 angeordnet, die die gemeinsame Öffnung 8 bilden, durch die der interne Kran 6 aus dem Maschinenhaus 1 herausragen kann. Es besteht damit die Möglichkeit, einerseits die beiden Teilschalen 11 und 12 sowie die weitere Kraneinrichtung 62 mit vergleichsweise geringem Aufwand mittels des internen Krans 6 anzuheben und zur Montage an der Turmspitze bzw. am Maschinenhaus 1 bereitzustellen, und ferner nach Fertigstellung des Maschinenhauses 1 die Turbine 9 in Verbindung mit der weiteren Kraneinrichtung 62 anzuheben und ebenfalls zur Montage am Maschinenhaus 1 (Befestigungsbereich 13) anzuordnen.

Wurden in Verbindung mit der internen Kranfunktion bzw. dem internen Kran 6 sowie der weiteren Kraneinrichtung 62 die Komponenten der Windenergieanlage W angehoben und im Bereich der Turmspitze und speziell im Bereich des Maschinenhauses 1 angeordnet und montiert, dann wird der interne Kran 6 in das Innere des Maschinenhauses 1 und auch in das Innere des Turms 2 zurückgebracht, nachdem auch die weitere Kraneinrichtung 62 wieder entfernt wurde, und es wird die Öffnung 8 im oberen Bereich des Maschinenhauses 1 bzw. im Dachbereich 21 des Maschinenhauses 1 dicht verschlossen, sodass das Maschinenhaus 1 in diesem Bereich vollständig abgedichtet ist. Bei Bedarf kann jeder Zeit die Öffnung 8 erneut freigelegt werden, und es kann erneut der interne Kran 6 durch die Öffnung 8 ausgefahren und in eine betriebsfähige Position gebracht werden, wie sie beispielsweise in Figur 3 gezeigt ist.

Ausgehend von einer Situation gemäß der Darstellung in Figur 3, bei der das Maschinenhaus 1 vollständig montiert und der interne Kran 6 vollständig ausgefahren ist zum Anheben weiterer Komponenten der Windenergieanlage W, wird nachstehend anhand der Figuren 4 bis 6 die weitere Montage der Windenergieanlage W und insbesondere die Montage der weiteren Kraneinrichtung 62 sowie der Turbine 9 auf bzw. an dem Maschinenhaus 1 beschrieben.

Die in Figur 3 bereits angedeutete weitere Kraneinrichtung 62 bildet ein zeitweiliges Teil der Windenergieanlage W und wird mit Hilfe des aus der Öffnung 8 nach oben hinausragenden internen Krans 6 an dem Maschinenhaus 1 und speziell im Dachbereich 21 desselben angeordnet, nachdem die Teile der weiteren Kraneinrichtung am Fußpunkt des Turms 2 bzw. dem Erdboden 3 bereitgestellt wurden. Die weitere Kraneinrichtung 62 umfasst vordere Rollen 63, die am Maschinenhaus oberhalb der Befestigungseinrichtung 13 im Bereich der Stirnseite des Maschinenhauses angeordnet sind. Die vorderen Rollen 63 diesen zur Führung von Seilen 64, mittels denen die am Erdboden bereitgestellte Turbine 9 angehoben werden kann. Die Seile 64 laufen ebenfalls über hintere Rollen 65 der weiteren Kraneinrichtung 62, die am turmseitigen Ende des Maschinenhauses 1 angeordnet sind. In der Darstellung der Figur 3 sind lediglich die vorderen Rollen 63 bereits montiert, während die hinteren Rolle 65 noch nicht montiert sind. Am Fußpunkt des Turms 2 ist eine Seilwinde 66 angeordnet, mittels der die Seile 64 betätigt und angezogen werden können zum Anheben der Turbine 9, die an dem von den vorderen Rollen 63 nach unten führenden Seilstück angebracht ist. Durch eine entsprechende Betätigung der Seilwinde 66 können die Seile 64 angezogen oder abgesenkt werden zum bedarfsweisen Anheben oder Absenken der damit verbundenen Turbine 9, wobei die weitere Kraneinrichtung 62 (mit 63, 64, 65 und 66) eine von dem internen Kran 6 unabhängig zu betätigende Kraneinrichtung darstellt und zum Anheben großer Lasten geeignet bzw. ausgelegt ist.

Es wird der interne Kran 6 zur Montage und späteren Demontage der weiteren Kraneinrichtung 62 verwendet, wobei im Einzelnen auch die Seile 64 mittels des internen Krans 6 auf die Rollen aufgebracht werden. Während der interne Kran 6 in der Windenergieanlage W bzw. in dem Maschinenhaus 1 und/oder dem Turm 2 verbleibt, wird nach der Montage der Turbine 9 die weitere Kraneinrichtung 62 unter Verwendung des internen Krans 6 wieder entfernt.

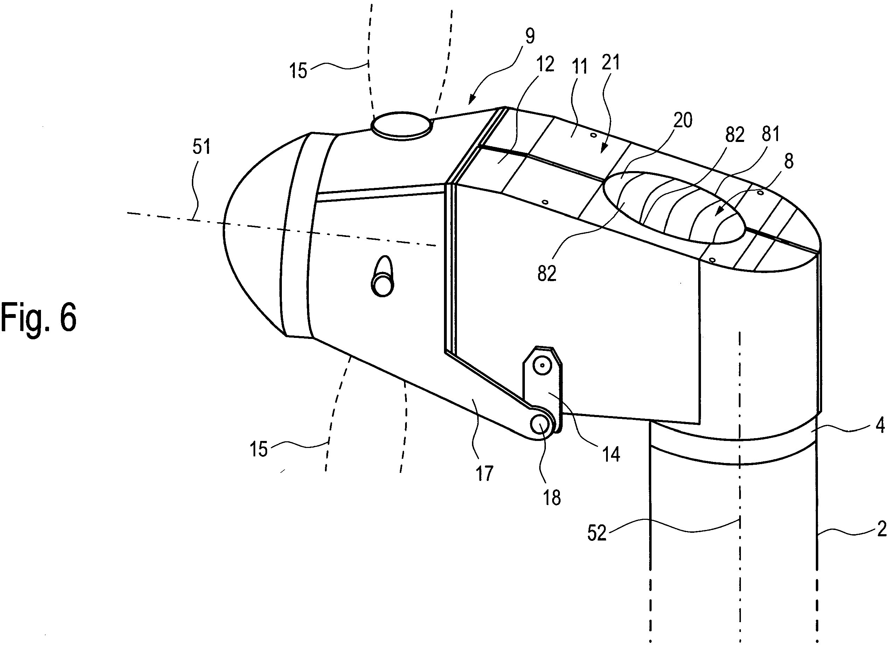

Auf der Basis dieser Voraussetzungen wird in gleicher Weise, wie es in Figur 1 bezüglich der ersten und zweiten Teilschalen 11 und 12 dargestellt ist, wird nach der Fertigstellung des Maschinenhauses 1 die Turbine 9 auf den Erdboden 3 oder einer gleichartigen Höhe in vormontierter Weise als ein vollständiges Modul bereitgestellt. Mittels der weiteren Kranfunktion bzw. der weiteren Kraneinrichtung 62 wird die Turbine 9 angehoben und parallel zur Erstreckungsrichtung des Turms 2 in Richtung des Maschinenhauses 1 befördert. Die Turbine 9 im Sinne eines vormontierten Moduls umfasst beispielsweise und nicht abschließend den mechanischen Triebstrang und somit im Wesentlichen sich drehende Teile wie die Nabe, an der Rotorblätter 15 angeordnet sind, entsprechende Lagereinrichtungen, eine Rotorwelle sowie gegebenenfalls ein Getriebe und eine Bremseinrichtung. Zur Vereinfachung der Darstellung sind diese Teile in der Turbine 9 nicht gezeigt. Es ist ferner ein Generator 16 ein Teil des Moduls der Turbine 9, wobei dies in den Figuren 4 und 5 schematisch und vereinfacht angedeutet ist. Figur 6 zeigt die Andeutung der zwei oder drei Rotorblätter 15, die in den Figuren 4 und 5 zur Vereinfachung nicht gezeigt sind. Mit 51 ist die Drehachse der Turbine 9 bzw. der Rotorblätter 15 bezeichnet. Es kann ferner zur sogenannten Pitch-Verstellung der Rotorblätter 15 eine entsprechende mechanische Einrichtung in der Nabe vorgesehen sein.

Gemäß der Darstellung in Figur 4 umfasst die Turbine 9 des Weiteren einen Gelenkarm 17, der am Gehäuse der Turbine 9 angeordnet ist und sich nach oben in Richtung des Maschinenhauses 1 erstreckt. Am Ende des Gelenkarms 17 ist ein Gelenkstab 18 angeordnet, der sich im Wesentlichen senkrecht zu dem Gelenkarm 17 erstreckt, in der Darstellung gemäß den Figuren 4 und 5 im Wesentlichen senkrecht zur Bildebene. Im Einzelnen weist die Turbine 9 vorzugsweise zwei gleichartige Gelenkarme 17 auf, und es ist an deren äußeren Ende ein die Gelenkarme 17 verbindender Gelenkstab 18 angeordnet und befestigt. Der Gelenkstab 18 wird durch die beiden Gelenkarme 17 gestützt.

Wird gemäß der Darstellung in Figur 4 die Turbine 9 mittels der weiteren Kraneinrichtung 62 angehoben, dann bewegt sich die Turbine 9 nach oben in Richtung des Maschinenhauses 1, wobei sich der am Gelenkarm 17 angeordnete Gelenkstab 18 der Klaue 14 nähert. In der Darstellung gemäß Figur 5 steht der Gelenkstab 18 nach weiterem Anheben im Eingriff mit der Klaue 14, die an jeder äußeren Seite jeder Teilschale 11 und 12 angeordnet ist und entsprechend dem Durchmesser und der Form des Gelenkstabs 18 dimensioniert ist.

Wird die Turbine 9 weiter mittels der weiteren Kraneinrichtung 62 angehoben, dann bildet der Gelenkarm 17 zusammen mit der Klaue 14 einen zeitweiligen Drehpunkt, und es wird die Turbine 9 bei einem weiteren Anheben um diesen Drehpunkt geschwenkt, sodass ein an der Turbine 9 angeordneter Turbinenbefestigungsbereich 19 nach Beendigung der Schwenkbewegung der Turbine 9 an dem Befestigungsbereich 13 der jeweiligen Teilschalen 11 und 12 anliegt. Die Turbine 9 wird in dieser Position durch die weitere Kraneinrichtung 62 gehalten und es wird die Turbine 9 mittels entsprechender (nicht gezeigter) Verbindungselemente am Maschinenhaus 1 befestigt, wobei im Einzelnen eine Verbindung gebildet wird zwischen dem Befestigungsbereich 13 des Maschinenhauses 1 bzw. der Teilschalen 11 und 12 einerseits und dem Turbinenbefestigungsbereich 19 andererseits. Der Befestigungsbereich 13 und der Turbinenbefestigungsbereich 19 sind hinsichtlich der Dimensionierung (Ausdehnung der Bereiche und Öffnungen für Verbindungselemente) übereinstimmend bzw. gleichartig ausgeführt.

Ist die Turbine 9 an dem Maschinenhaus 1 mittels den jeweiligen Befestigungsbereichen 13 und 19 sicher und vollständig befestigt, dann ist die Krafteinleitung durch die weitere Kraneinrichtung 62 beendet und es ist der Eingriff des Gelenkstabs 18 in der Klaue 14 gelöst bzw. kräftefrei. Damit ist dieser zeitweilige Drehpunkt an dieser Stelle nicht mehr existent. Er wurde lediglich zum präzisen Schwenken der Turbine 9 in die Befestigungsposition benötigt und ist nach dem Befestigen der Turbine 9 mit den jeweiligen Befestigungsbereichen13 und 19 nicht mehr erforderlich. Insbesondere nimmt der zeitweilige Drehpunkt in Verbindung mit dem Gelenkstab 18 und der Klaue 14 keine Kräfte mehr auf und kann zum Stützen der Turbine 9 keinen weiteren Beitrag leisten.

Im Ergebnis wird der in Figur 6 dargestellte Zustand erhalten, nachdem die Montage der Turbine 9 als Modul an dem Maschinenhaus 1 abgeschlossen ist. Hierbei ragt die Turbine 9 mit ihren Komponenten teilweise in das Maschinenhaus 1 hinein. Figur 6 zeigt hierbei speziell den Zustand, bei dem nach der abgeschlossenen Montage der Turbine 9 am Maschinenhaus 1 die interne Kranfunktion nicht mehr benötigt wird und der interne Kran 6 in das Innere des Maschinenhauses 1 und/oder des Turms 2 abgesenkt wurde. Es ist ebenfalls zuvor die auf dem Maschinenhaus 1 zeitweilig angeordnete weitere Kraneinrichtung 62 unter Verwendung des internen Krans 6 wieder entfernt. Ein Deckelelement 20 verschließt die Öffnung 8 im Dachbereich 21, durch die sich zuvor der interne Kran 6 nach oben erstreckt hat.

Es werden somit nach Beendigung der Montage des Maschinenhauses 1 sowie der Turbine 9 die weitere Kraneinrichtung 62 und der interne Kran 6 aus der jeweiligen Betriebsposition entfernt. Die weitere Kraneinrichtung 62 wird zum Fußpunkt des Turms 2 gebracht und es wird der interne Kran 6 in eine Ruheposition innerhalb des Maschinenhauses 1 und/oder des Turms 2 eingefahren.

Mit der vorliegenden Erfindung sind die folgenden Vorteile verbunden. Bei der vorstehend beschriebenen Aufteilung des Maschinenhauses 1 auf im Wesentlichen zwei Teilschalen 11 und 12 wird vorteilhaft erreicht, dass bei der Bereitstellung der Teilschalen 11 und 12 vor dem Anheben durch den internen Kran 6 die Bestückung der jeweiligen Teilschalen 11 und 12 vollständig oder im Wesentlichen und infolge der Anordnung auf dem Erdboden 3 oder einer gleichartigen Höhe auf einfache Weise erfolgen kann. Es betrifft dies hauptsächlich die Bestückung der jeweiligen Teilschalen 11 und 12 mit einer nebengeordneten Infrastruktur, wie beispielsweise mit Schaltschränken, einer Steuerungselektronik und/oder einer entsprechenden Sensorik, einer Kühlung und Lüftung sowie mit erforderlichen Hilfsbetrieben und Wartungshilfen (Aufzählung nicht abschließend), sodass im Wesentlichen die nebengeordnete Infrastruktur bereits vormontiert und in den Teilschalen 11 und 12 beinhaltet ist, wenn die Teilschalen 11 und 12 am oberen Ende des Turms 2 bzw. an der Turmspitze montiert werden. Eine Vormontage der an dem fertigen Maschinenhaus 1 danach zu montierenden Turbine 9 kann ebenfalls vor dem Anheben durch die weitere Kraneinrichtung 62 erfolgen.

Die Ausstattung oder Bestückung der Teilschalen 11 und 12 mit der weiteren nebengeordneten Infrastruktur der Windenergieanlage W vor der Montage des Maschinenhauses 1 ermöglicht eine freie und einfache Bestückung, wobei dies einen erheblich geringeren Aufwand im Vergleich zu konventionell aufgebauten Windenergieanlagen (siehe Figuren 7 und 8) erfordert. Im Bereich des Erdbodens 3 bei der Bereitstellung der Teilschalen 11 und 12 gemäß der Darstellung in den Figuren 1 und 2 kann mit einfachen Einrichtungen und Maschinen die Bestückung vorgenommen werden, und es ist nicht erforderlich, einzelne Teile der nebengeordneten Infrastruktur mittels des internen Krans 6 anzuheben und im fertiggestellten Maschinenhaus 1 zu montieren. Vielmehr ermöglicht die Vormontage der nebengeordneten Infrastruktur in den jeweiligen erfindungsgemäßen Teilschalen 11 und 12 ein Anheben des jeweiligen modulartigen Aufbaus durch den internen Kran 6. Mit der vereinfachten Vormontage und den im Wesentlichen zwei Hebevorgängen zur Bildung des Maschinenhauses 1 und dem nachfolgenden Anheben der Turbine 9 (mittels der zuvor ebenfalls leicht zu montierenden weiteren Kraneinrichtung 62) sind erhebliche Einsparungen insbesondere hinsichtlich der Montagezeit der Windenergieanlage W und der Kosten für eine externe Kraneinrichtung verbunden. Erfindungsgemäß wird somit ein hinsichtlich der erforderlichen externen Hilfsmittel, wie einer externen Kraneinrichtung, eine autarke Windenergieanlage erhalten.

Die Vorgehensweise gemäß der vorliegenden Erfindung zur Montage der Windenergieanlage W bzw. das zugehörige Verfahren geht davon aus, dass die Windenergieanlage W auf einem Turm 2 anbringbar ist, an dem das Maschinenhaus 1 und daran die Turbine 9 anbringbar sind. Ferner weist die Windenergieanlage W den internen Kran 6 sowie die weitere Kraneinrichtung 62 auf. Entsprechend diesen Voraussetzungen liegen dem Verfahren oder der Vorgehensweise die folgenden Schritte zugrunde:
- Bereitstellen von Teilschalen an einem Fußpunkt des Turms durch Anordnen der Teilschalen um den Fußpunkt (Schritt 1);
- Anheben der Teilschalen nacheinander mittels des internen Krans und Befördern der Teilschalen nacheinander zur Turmspitze zur Montage der Teilschalen an der Turmspitze (Schritt 2);
- Montage der Teilschalen zur Bildung des Maschinenhauses der Windenergieanlage mit einer Öffnung in einem Dachbereich des Maschinenhauses zum Durchlassen des internen Krans (Schritt 3);
- Bereitstellen einer weiteren Kraneinrichtung und Anordnen derselben auf dem Dachbereich des Maschinenhauses mittels des internen Krans, wobei die weitere Kraneinrichtung zum Anheben der am Fußpunkt des Turms angeordneten Turbine ausgebildet ist (Schritt 4);
- Entfernen der weiteren Kraneinrichtung vom Maschinenhaus und Absenken der weiteren Kraneinrichtung zum Fußpunkt nach der Montage der Turbine an dem Maschinenhaus (Schritt 5); und
- Einfahren des internen Krans in das Maschinenhaus und/oder den Turm und Verschließen der Öffnung in dem Maschinenhaus (Schritt 6).

Mit dem weiteren Anschließen der entsprechenden Komponenten der Windenergieanlage, speziell der Turbine 9 innerhalb des Maschinenhauses 1 mit den weiteren nebengeordneten Infrastrukturen wird die Betriebsbereitschaft der Windenergieanlage W bereitgestellt. Mit der Montage der Turbine 9 an dem Maschinenhaus 1 ist die weitere Kraneinrichtung 62 nicht mehr erforderlich, und mit der Betriebsbereitschaft der Windenergieanlage W ist die interne Kranfunktion nicht mehr erforderlich, und es wird die weitere Kraneinrichtung 62 mittels des internen Krans 6 entfernt (abgebaut und zum Fußpunkt des Turms 2 gebracht) und danach der interne Kran 6 eingefahren und in einem entsprechenden Raum innerhalb des Maschinenhauses 1 und/oder des Turms 2 angeordnet, sodass bei Bedarf, d. h. bei Wartungsarbeiten oder Reparaturarbeiten die interne Kranfunktion jederzeit auf einfache Weise wieder hergestellt werden kann.

Hierzu wird in der oberen Oberfläche bzw. in dem Dachbereich 21 des Maschinenhauses 1 die Öffnung 8 freigelegt, indem das Deckelelement 20 entfernt wird. Es kann dann der bei einem Ruhezustand im Maschinenhaus 1 und/oder in dem Turm 2 verbleibende interne Kran 6 erneut aus dieser Öffnung 8 ausgefahren und in die Betriebsposition gebracht werden. Eine Demontage der Windenergieanlage W erfolgt bedarfsweise in der umgekehrten Reihenfolge der vorstehend beschriebenen Vorgehensweise zur Montage der Windenergieanlage W. Im Einzelnen werden in diesem Fall die Teile der weiteren Kraneinrichtung 62 bereitgestellt und nach Anheben durch den internen Kran 6 am Dachbereich 21 des Maschinenhauses 1 befestigt (Figuren 3 bis 5). Es werden ferner die internen nebengeordneten Infrastrukturen von der Turbine 9 (elektrisch und mechanisch) getrennt, und es wird die Turbine 9 mittels der wieder montierten weiteren Kraneinrichtung 62 gestützt und von dem Maschinenhaus 1 gelöst. Sodann kann die Turbine 9 als Ganzes, beispielsweise in Form eines Moduls, mittels der weiteren Kraneinrichtung 62 abgesenkt werden. Reparatur- oder Wartungsarbeiten sind möglich.

Ergänzend kann bei Bedarf auch in der umgekehrten Reihenfolge gemäß der vorstehenden Beschreibung das Maschinenhaus 1 demontiert werden, indem die beiden Teilschalen 11 und 12 mechanisch und elektrisch voneinander getrennt werden. Danach können in beliebiger Reihenfolge die Teilschalen 11 und 12 mittels des internen Krans 6 abgesenkt werden, bis die Teilschalen 11 und 12 am Fußpunkt des Turms 2 und insbesondere auf dem Erdboden 3 oder auf einer äquivalenten Höhe angeordnet werden können. Reparaturen- oder Wartungsarbeiten können in dieser Position ebenfalls auf einfache Weise durchgeführt werden. Es ist nicht erforderlich, eine Mehrzahl von Einzelteilen für eine dortige Montage oder einen Austausch von Teilen zur Turmspitze zu befördern.

Nach Beendigung der Wartungs- oder Reparaturarbeiten kann die Windenergieanlage W mit dem vorstehend beschriebenen erfindungsgemäßen Aufbau erneut in der gleichen Weise montiert werden. Die Windenergieanlage W gemäß der vorliegenden Erfindung weist somit zwei eigene Kraneinrichtungen auf. Der interne Kran 6 verbleibt bei der Windenergieanlage W und wird im Ruhezustand innerhalb des Maschinenhauses 1 und/oder des Turms 2 angeordnet. Der Interne Kran 6 dient zur Unterstützung der Montage der Teilschalen 11 und 12 des Maschinenhauses 1. Die weitere Kraneinrichtung 62 ist für hohe Lasten ausgelegt und zeitweilig an dem Maschinenhaus 1 angeordnet und dient zur Unterstützung der Montage der Turbine 9 (mit einer hohen Masse). Die weitere Kraneinrichtung 62 wird unter Verwendung des internen Krans 6 montiert und nach Montage der Turbine 9 wieder abgebaut und abgesenkt. Die weitere Kraneinrichtung 62 kann danach an anderen gleichartigen Windenergieanlagen verwendet werden.

Die Bereitstellung eines externen Krans (siehe beispielsweise Figur 7) ist nicht erforderlich. Dies ist insoweit vorteilhaft, als dass selbstfahrende Kraneinrichtungen für die aus wirtschaftlichen Gründen immer höher werdenden Windenergieanlagen (Höhe der Rotorachse über der Erdoberfläche 3 oder dem Fußpunkt des Turms 2 von 100 m bis 150 m) nur in Verbindung mit großen Fahrzeugen bereitgestellt werden können, so dass geeignete Anfahrtswege vorbereitet werden müssen oder allgemein bereitzuhalten sind. Auch verursacht die Verwendung einer derartigen externen Kraneinrichtung erhebliche Kosten. Mit der ständig zur Verfügung stehenden internen Kranfunktion durch den internen Kran 6, der weiteren internen Kranfunktion durch die zeitweilig zur Verfügung stehende weitere Kraneinrichtung 62 sowie den modulartigen Aufbau der einzelnen Komponenten der Windenergieanlage W, wie der bei den Teilschalen 11 und 12 des Maschinenhauses 1 und der Turbine 9, und ebenfalls unter Berücksichtigung der einfachen Montage und Demontage der weiteren Kraneinrichtung 62 sind nur wenige Anhebevorgänge und Montagevorgänge erforderlich, die jedoch ohne externe Maßnahmen erfolgen können. Die erfindungsgemäße Windenergieanlage W ist in Bezug auf die erforderlichen Kraneinrichtungen völlig autark. Die zusätzlichen Kosten zur Bereitstellung der internen Kranfunktionen sind nach kurzer Betriebszeit und entsprechenden Wartungsarbeiten ausgeglichen.

Mit der Windenergieanlage W, die die erfindungsgemäße Anordnung verwendet und der dadurch erheblich vereinfachten Montage der Windenergieanlage W, kann ein gegenüber konventionellen Windenergieanlagen deutlich besseres Preis-Leistungsverhältnis sowie eine kürzere Montagedauer erreicht werden. Mit dem zusätzlichen Einfahren des internen Krans 6 in das Maschinenhaus 1 und/oder den Turm 2 (innerhalb des gesamten Turms 2, vorzugsweise in dessen oberen Bereich) sowie dem Entfernen der weiteren Kraneinrichtung 62 wird eine geschlossene Form des Maschinenhauses 1 der Windenergieanlage W erhalten, da lediglich bei Bedarf und somit insbesondere außerhalb des Betriebs der Windenergieanlage W der interne Kran 6 über die obere Oberfläche bzw. den Dachbereich 21 des Maschinenhauses 1 und durch die Öffnung 8 ausgefahren und in den betriebsbereiten Zustand gebracht wird und die weitere Kraneinrichtung 62 auf einfache Weise und ebenfalls ohne externe Hilfen montiert werden kann. Eine unnötige Belastung des internen Krans 6 oder der weiteren Kraneinrichtung 62 durch Wetterverhältnisse oder eine Belastung der gesamten Windenergieanlage W durch den zusätzlichen Luftwiderstand des ausgefahrenen internen Krans 6 oder eine damit verbundene Verzerrung der Luftströmung wird damit im betriebsbereiten Zustand der Windenergieanlage W vermieden.

Im betriebsfähigen Zustand der Windenergieanlage W ist der interne Kran 6 in dem Maschinenhaus 1 versenkt angeordnet, und es ist die Windenergieanlage W ohne Einschränkung ohne Einschränkung betreibbar. Befindet sich der turmseitige bzw. interne Kran 6 in seinem Betriebszustand, dann ist im Allgemeinen die Windenergieanlage W abgeschaltet bzw. befindet sich im nichtbetriebsfähigen Zustand.

Die Ausbildung einer Gondel bei bekannten bzw. konventionellen Windenergieanlage ist im Allgemeinen als monolithisch anzusehen, da die Gondel an der Turmspitze aus einer Vielzahl von Teilen zusammengesetzt ist und danach nicht auf einfache Weise trennbar ist. Die Gondel in der bekannten Ausführung wird somit um die Anordnung von Figur 8 zusammengesetzt.

Die Bereitstellung der beiden internen Kranfunktionen, die Bereitstellung der auf einfache Weise am Fußpunkt des Turms 2 vormontierten und mit nebengeordneter Infrastruktur bestückten Teilschalen 11 und 12 sowie des Moduls der Turbine 9 ermöglicht unter Nutzung des internen Krans 6 und der weiteren Kraneinrichtung eine sehr wirtschaftliche und schnelle Montage der gesamten Windenergieanlage, und damit eine schnelle Herstellung oder Wiedergewinnung der Betriebsbereitschaft derselben. Mit der Möglichkeit der Montage/Demontage der Windenergieanlage W gemäß der vorliegenden Erfindung ohne Verwendung einer externen Kraneinrichtung ermöglicht eine weitere Steigerung der Turmhöhe. Dies gilt insbesondere auch für den Offshore-Bereich, bei der die Beschaffung einer externen Kraneinrichtung für die diese Höhen und die entsprechenden Massen kaum möglich ist.

Die vorliegende Erfindung wurde anhand von Ausführungsbeispielen in Verbindung mit den dazugehörigen Figuren beschrieben.

Es ist jedoch für den auf diesem Gebiet tätigen Fachmann selbstverständlich, dass die Ausgestaltung der vorliegenden Erfindung gemäß den vorstehend beschriebenen Figuren und die für die jeweiligen Bauteile und Komponenten verwendeten Bezugszeichen der Figuren und der Beschreibung sowie die beispielhaften Angaben nicht einschränkend auszulegen sind. Die vorliegende Erfindung ist somit nicht auf die angegebenen Darstellungen in den Figuren und insbesondere nicht auf die angegebenen Dimensionen und Anordnungen beschränkt. Als zur Erfindung gehörig werden sämtliche Ausführungsformen und Varianten angesehen, die unter die beigefügten Patentansprüche fallen.

## Patentansprüche

1. Verfahren zur Montage einer Windenergieanlage, wobei die Windenergieanlage (W) einen Turm (2) anbringbar ist, an dessen Spitze ein Maschinenhaus (1) anbringbar ist, sowie einen internen Kran (6) an der Spitze des Turms (2) aufweist, und wobei eine Turbine (9) an dem Maschinenhaus anbringbar ist, mit den Schritten:
- Bereitstellen von Teilschalen (11, 12) an einem Fußpunkt des Turms durch Anordnen der Teilschalen um den Fußpunkt (Schritt 1),
- Anheben der Teilschalen (11, 12) nacheinander mittels des internen Krans (6) und Befördern der Teilschalen nacheinander zur Turmspitze zur Montage der Teilschalen an der Turmspitze (Schritt 2),
- Montage der Teilschalen zur Bildung des Maschinenhauses der Windenergieanlage mit einer Öffnung (8) in einem Dachbereich (21) des Maschinenhauses zum Durchlassen des internen Krans (Schritt 3),
- Bereitstellen einer weiteren Kraneinrichtung (62) und Anordnen derselben auf dem Dachbereich des Maschinenhauses mittels des internen Krans, wobei die weitere Kraneinrichtung (62) zum Anheben der am Fußpunkt des Turms angeordneten Turbine (9) ausgebildet ist (Schritt 4),
- Entfernen der weiteren Kraneinrichtung (62) vom Maschinenhaus und Absenken der weiteren Kraneinrichtung zum Fußpunkt nach der Montage der Turbine an dem Maschinenhaus (Schritt 5), und
- Einfahren des internen Krans in das Maschinenhaus und/oder den Turm und Verschließen der Öffnung in dem Maschinenhaus (Schritt 6).

2. Verfahren zur Montage einer Windenergieanlage nach Anspruch 1, wobei der Schritt des Bereitstellens der Teilschalen (11, 12) zur Bildung des Maschinenhauses (1) die Vormontage einer nebengeordneten Infrastruktur vor dem Anheben der Teilschalen und Befestigen der Teilschalen an der Turmspitze umfasst.

3. Verfahren nach Anspruch 2, wobei die Vormontage der nebengeordneten Infrastruktur die Montage von beispielsweise Hilfsbetrieben, Steuerungseinrichtungen, Sensoreinrichtungen und Gehäuseteilen derselben in den Teilschalen (11, 12) während der Anordnung der Teilschalen am Fußpunkt des Turms (2) umfasst.

4. Verfahren nach einem der Ansprüche 1 bis 3, wobei der Schritt des Befestigens der beiden Teilschalen (11, 12) an der Turmspitze die drehbare Befestigung der beiden Teilschalen an einer Azimut-Verstelleinrichtung (4) oberhalb eines obersten Turmsegments umfasst.

5. Verfahren nach Anspruch 4, wobei die Teilschalen (11, 12) an einer jeweiligen zur Befestigung am Turm abgewandten Seite eine Turbinenöffnung (10) und einen Befestigungsbereich (13) aufweisen, und der Schritt des Montierens der Turbine den Schritt des Schwenkens der Turbine (9) in die Turbinenöffnung (9) des Maschinenhauses (1) umfasst, sowie die Befestigung der Turbine (9) an dem Befestigungsbereich des Maschinenhauses.

6. Verfahren nach Anspruch 1, wobei das Montieren der Turbine (9) an dem Maschinenhaus (1) das Anheben der Turbine (9) und Schwenken derselben mittels der weiteren Kraneinrichtung (62) zum Anbringen an dem Maschinenhaus (1) umfasst.

7. Windenergieanlage zur Umwandlung von Windenergie in elektrische Energie, wobei die Windenergieanlage (W) an einem Turm (2) anbringbar ist, mit
- einem an der Spitze des Turms (2) angeordneten Maschinenhaus (1),
- einer Turbine (9) einschließlich eines Rotors, wobei die Turbine (9) teilweise in das Maschinenhaus (1) eingesetzt und an diesem befestigt ist, und
- einem internen Kran (6), wobei
- das Maschinenhaus (1) eine erste Teilschale (11) und eine zweite Teilschale (12) aufweist, und das Maschinenhaus (1) gebildet wird durch Zusammensetzen der beiden Teilschalen (11, 12) und Befestigen der beiden Teilschalen (11, 12) miteinander,
- das Maschinenhaus (1) in seinem Dachbereich (21) eine Öffnung (8) aufweist, und wobei
- der interne Kran (6) in seinem betriebsbereiten Zustand durch die Öffnung (8) aus dem Maschinenhaus (1) herausragt, und der interne Kran (6) in dem betriebsbereiten Zustand der Windenergieanlage (W) in das Maschinenhaus (1) und/oder den Turm (2) zurückgezogen ist.

8. Windenergieanlage nach Anspruch 7, wobei die Teilschalen (11, 12) jeweils in ihrer oberen Oberfläche eine Teilöffnung (81, 82) aufweisen, und mittels der Teilöffnungen (81, 82) die Öffnung (8) nach dem Zusammensetzten der Teilschalen (11, 12) im Dachbereich (21) des Maschinenhauses (1) gebildet wird.

9. Windenergieanlage nach Anspruch 7, wobei die Teilschale (11, 12) zur Bildung des Maschinenhauses (1) an ihrer dem Turm (2) abgewandten Stirnseite jeweils eine Turbinenöffnung (10) aufweisen zum Ansetzen der Turbine (9) an das Maschinenhaus (1), und ringförmig um die Turbinenöffnung (10) ein Befestigungsbereich (13) gebildet ist, an der Turbine (9) ein Turbinenbefestigungsbereich (19) an einer dem Maschinenhaus (1) zugewandten Seite gebildet ist, der an den Befestigungsbereich (13) des Maschinenhauses (1) angepasst und der bei der Montage der Turbine (9) am Maschinenhaus (1) mit dem Befestigungsbereich (13) verbindbar ist.

10. Windenergieanlage nach Anspruch 7, wobei die Windenergieanlage (W) eine weitere Kraneinrichtung (62 bis 66) aufweist zum Anheben der Turbine (9) zur Montage am Maschinenhaus (1), und die weitere Kraneinrichtung (62 bis 66) mittels des internen Krans (6) zeitweilig und abnehmbar im Dachbereich (21) des Maschinenhauses (1) angeordnet ist.
